# NEUE EUROPÄISCHE PATENTSCHRIFT

(11) **EP 1 751 505 B2**
(45) Veröffentlichungstag und Bekanntmachung des Hinweises auf die Entscheidung über den Einspruch: **27.02.2019**
(45) Hinweis auf die Patenterteilung: 25.02.2015
(21) Anmeldenummer: 05761839.9
(22) Anmeldetag: 06.06.2005
(51) Int. Cl.: G01F 3/10, G01D 5/16, G01R 33/09

(54) **DURCHFLUSSMENGENFÜHLER**
FLOW SENSOR
CAPTEUR DE DEBIT

(30) Priorität: 04.06.2004 DE 102004027386
(43) Veröffentlichungstag der Anmeldung: 14.02.2007
(73) Patentinhaber: VSE VOLUMENTECHNIK GmbH, 58809 Neuenrade (DE)
(72) Erfinder: ERTLER, Werner, 58809 Neuenrade (DE)
(74) Vertreter: Einsel, Martin
(86) Internationale Anmeldenummer: PCT/EP2005/006066
(87) Internationale Veröffentlichungsnummer: WO 2005/119184

(56) Entgegenhaltungen:
- EP-A- 0 393 294
- EP-B1- 0 053 757
- WO-A-01/63221
- DE-A1- 3 435 867
- DE-A1- 4 042 397
- DE-A1- 10 158 052
- JP-A- H08 285 654
- US-B1- 6 181 036
- <<<N O N - C I T E D D O C U M E N T>>> "Leiterplatte", WIKIPEDIA-EINTRAG, 23 November 2015 (2015-11-23), pages 1-16, XP055262409,
- <<<N O N - C I T E D D O C U M E N T>>> "FELDPLATTE", WIKIPEDIA-EINTRAG, XP055262410,
- <<<N O N - C I T E D D O C U M E N T>>> "MAGNETORESISTIVER EFFEKT", WIKIPEDIA-EINTRAG, XP055262411,
- <<<N O N - C I T E D D O C U M E N T>>> "Differential-Feldplattensensor", KRAFTFAHRTECHNISCHES TASCHENBUCH, 29 April 2004 (2004-04-29), page 120, XP0585262411,
- <<<N O N - C I T E D D O C U M E N T>>> "DAUERMAGNET", WIKIPEDIA-EINTRAG, XP055262429,
- <<<N O N - C I T E D D O C U M E N T>>> "SELTENEERDENMAGNET", WIKIPEDIA-EINTRAG, XP055262429,

## Beschreibung

Die Erfindung betrifft einen Durchflussmengenfühler mit einer Messkammer, in die ein Fluid zuführbar und wieder abführbar ist, dessen Volumen und/oder Durchflussgeschwindigkeit gemessen werden soll, mit in der Messkammer angeordneten, frei drehbar gelagerten Messwerkelementen, mit einem Magneten zur Erzeugung eines magnetischen, Feldes in der Messkammer und ihrer näheren Umgebung, und mit mindestens einer Sensoreinrichtung zur Messung des magnetischen Feldes und/oder von Veränderungen des magnetischen Feldes.

Durchflussmengenfühler werden auch als Volumensensoren bezeichnet. Sie sind im Regelfall als Verdrängerzähler aufgebaut. Beispiele hierfür sind Zahnradsensoren, Schraubenspindelzähler, Ovalradzähler, Ringkolbenzähler oder auch Messturbinen oder Zahnrad-Dosierpumpen. Sie dienen dazu, ein Volumen, eine Durchflussmenge oder die Geschwindigkeit zu messen, mit der ein Medium, hier also ein Fluid, durch das Messgerät passiert. Die Fluide können Flüssigkeiten, Pasten oder auch Gase sein.

Bei den Durchflussmengenfühlern handelt es sich in der Praxis häufig nicht um Messgeräte im engeren Sinne, da die Auswerteelektronik nicht Teil des Gerätes ist, sondern sich extern befindet. Dennoch wird häufig der Begriff Durchflussmengenmessgerät verwendet und man spricht auch von Messkammern und Messwerkelementen etc.. Die Durchflussmengenfühler werden vielfach auch als Volumensensoren, Durchflusssensoren, Durchflussmessgeräte und in anderer Form bezeichnet.

Die Volumensensoren oder Durchflussmengenfühler fühlen lediglich den Durchfluss oder ein durchgeflossenes Volumen ab und geben ein Signal an die Auswerteeinheit oder Auswerteelektronik ab, aus der diese erst einen Messwert macht. Der Begriff "Durchflussmengenfühler" wird im Folgenden verwendet. Eine Verwechslung mit bestimmten Bauelementen in dem Gerät, die Fühler oder Sensoren im engeren Sinne sind, wird durch die Verwendung der vollständigen Bezeichnung vermieden.

Durchflussmengenfühler oder Volumensensoren in der Form von Zahnradsensoren sind beispielsweise aus der EP 0 053 575 B1, der EP 0 393 294 A1 oder der DE 40 42 397 C2 sowie der EP 0 741 279 B1 bekannt. Sie besitzen ein aus zwei Hälften bestehendes Gehäuse. In der einen Gehäusehälfte sind in einer Messkammer auf feststehenden Achsen über Kugellager ohne Wandberührung ein Paar runder Zahnräder frei drehbar gelagert. Die beiden Zahnräder kämmen miteinander. Das Medium, dessen gefördertes Volumen oder dessen Durchflussgeschwindigkeit bestimmt werden soll, wird durch eine erste Bohrung den beiden Zahnrädern zugeführt und zwar in den Bereich, in dem diese miteinander kämmen. Das Medium gelangt dadurch in die Kammern, die sich wechselseitig in den Zahnlücken der beiden Zahnräder bilden. Das nachströmende Medium führt dazu, dass die in den Kammern des Zahnrades befindlichen Mengen von der Einlass- zur Auslassseite transportiert werden und über die Bewegung der Zähne dann die Zahnräder in Drehung versetzen. Die beiden Zahnräder drehen dabei gegensinnig. Auf der anderen Seite der Zahnräder in Fließrichtung hinter dem kämmenden Bereich wird das Medium durch eine zweite Bohrung wieder abgeführt.

Die andere Gehäusehälfte deckt nach oben den Bereich der Messkammer mit den beiden Zahnrädern mit dem hier fließenden Medium ab. Sie schließt also die Messkammer dicht ab und verhindert, dass Fluidströme außerhalb des kämmenden Bereiches der Zahnräder die Messkammer passieren können. Die beiden Gehäusehälften liegen flächig aufeinander auf, zwischen ihnen liegt eine virtuell zu denkende Trennebene.

Permanentmagneten wie beispielsweise in der DE 40 42 397 C2 oder Trägerfrequenz-Sensoren, wie in der EP 0 741 279 B1 sind in dem Gehäuse benachbart zu dem kämmenden Bereich der Zahnräder vorgesehen und bauen ein elektromagnetisches Feld auf. Dieses Feld verändert sich durch die Zähne der Zahnräder beziehungsweise durch deren Bewegung.

Darüber hinaus nimmt die zweite Gehäusehälfte in den bekannten oben erwähnten Anordnungen einen Feldplattendifferenzialfühler auf. Der Feldplattendifferenzialfühler fühlt die Veränderungen der Felder ab, die durch die Bewegung der Zähne der drehenden Zahnräder verursacht wird.

Der Fühler ist bei diesen bekannten Geräten von dem zu messenden Medium beziehungsweise Fluid durch einen amagnetischen Einsatz getrennt, der ihn insbesondere vor den physischen und chemischen Beanspruchungen durch das Medium schützt. Das Medium kann nicht nur sehr unterschiedliche Temperatur oder Konsistenz besitzen, sondern auch chemisch aggressiv sein.

Dieser Schutz führt nachteiligerweise zu einem Abstand des Fühlers von den Zähnen der sich drehenden Zahnräder, der eine Messung erschwert und ihre Genauigkeit und Zuverlässigkeit begrenzt. Durch entsprechende Polstifte oder andere Maßnahmen wird nun die Bewegung einer jeden Zahnflanke während der Drehung des zugehörigen Zahnrades relativ zu dem Feldplattendifferenzialfühler festgestellt und nach außen an entsprechende Auswerteeinheiten mitgeteilt.

Insbesondere bei größeren Stückzahlen von Durchflussmengenfühlern gewinnt der wirtschaftliche Aspekt an Bedeutung. Trotzdem bleibt auch bei größeren Stückzahlen die Genauigkeit und Präzision von Bedeutung. In vielen Fällen wird auch in Regelkreisen abhängig von der Messung die Durchflussgeschwindigkeit eines Fluides eingestellt.

Es wäre daher wünschenswert, eine möglichst präzise Messung der Menge und/oder der Geschwindigkeit des Durchflusses eines Fluides mit Durchflussmengenfühlern vorzunehmen, die möglichst wenig aufwendig sind.

Aufgabe der Erfindung ist es daher, Durchflussmengenfühler vorzuschlagen, die eine besonders wirtschaftliche Konzeption mit gleichwohl genauen Messergebnissen verbinden.

Diese Aufgabe wird erfindungsgemäß gelöst durch einen Durchflussmengenfühler mit einer Messkammer, in die ein Medium (F) zuführbar und wieder abführbar ist, dessen Volumen und/oder Durchflussgeschwindigkeit gemessen werden soll, mit zwei in der Messkammer angeordneten, frei um jeweils eine Achse drehbar gelagerten Messwerkelementen mit Zähnen, mit mindestens einer Sensoreinrichtung zur Messung eines magnetischen Feldes und/oder von Veränderungen des magnetischen Feldes, wobei die Sensoreinrichtung axial versetzt zu den frei drehbar gelagerten Messwerkelementen oberhalb der Messkammer in einem Bereich angeordnet ist, unter dem sich die Zähne des ersten Messwerkelementes hinwegdrehen, und zeichnet sich dadurch aus, dass ein Magnet zur Erzeugung des magnetischen Feldes in der Messkammer und ihrer näheren Umgebung vorgesehen ist; dass die Sensoreinrichtung zur Messung des magnetischen Feldes mindestens einen Sensor aufweist, der den Riesenmagnetowiderstand nutzt; dass die Sensoreinrichtung eine Platine aufweist, die als Druckplatte ausgebildet ist und den den Riesenmagnetowiderstand nutzenden Sensor trägt; dass das Fluid chemisch oder physikalisch aggressiv sein kann, eine sehr hohe Temperatur aufweisen kann und dass ein hoher Druck herrschen kann, dass die Platine durch einen O-Ring allseits abgedichtet ist, dass die Eigenschaft als. Druckplatte der Platine zusammen mit der Abdichtung durch den O-Ring ein Hindurchtreten des Fluides hinter die Platine verhindert; dass die Platine unmittelbar benachbart zur Messkammer angeordnet und lediglich durch eine Vergussmasse von der Messkammer getrennt ist; und dass die Platine den Magneten trägt.

Der Riesenmagnetowiderstand, meist als GMR-Effekt bezeichnet, ist eine hochempfindliche Möglichkeit, Magnetfelder und deren Änderungen auf magnetoresistivem Wege nachzuweisen.

Bekannt ist der Einsatz von GMR-Sensoren bei der Abtastung von Zahnrädern im anderen Zusammenhang etwa aus der DE 296 12 946 U1. Der GMR-Sensor aus dieser bekannten Anordnung tastet radial einen Zahn eines sich drehenden Zahnrades ab, alternativ die zueinander versetzten Zähne eines auf der gleichen Achse angeordneten Zahnradpaares. Derartige Anordnungen sind allerdings für Volumensensoren ungeeignet, da dort immer zwei miteinander kämmende Zahnräder vorhanden sein müssen, die in einem engen Gehäuse mit engen Toleranzen gelagert sind. Bei einer Anordnung der GMR-Sensoren, wie vorgeschlagen werden nur noch die Zahnspitzen abgetastet, was zu einem ungenauen und unsymmetrischen elektrischen Signal und damit zu entsprechenden ungenauen Messungen der Durchflussmengen und -geschwindigkeiten führt. Darüber hinaus besteht seitlich neben den Zahnrädern kein Platz, beziehungsweise der spätere Einbau des Gesamtsystems in eine Anlage wird erheblich behindert.

Aus der US 6,181,036 B1 ist ein Drehwinkeldetektor für einen Schrittschaltmotor bekannt. Dieser Detektor setzt eine GMR-Element ein und tastet die Getriebezähne des Schrittschaltmotors radial von außen ab.

In der WO 01/63221 A1 wird ein Strömungssensor vorgeschlagen, der die Richtung und die Geschwindigkeit eines strömenden Fluids in einer geschlossenen Rohrleitung messen soll. Er arbeitet mit einem drehbaren Schaufelrad oder Flügelrad, welches aus einem Ansatz an der Rohrleitung in eine strömende Flüssigkeit hineingehalten wird. Die Drehachse des Schaufeirades wird senkrecht zur Rohrleitung angeordnet, so dass das strömende Fluid das Schaufelrad in Drehung versetzt. Die Schaufeln bestehen ganz oder teilweise aus einem magnetischen Material. In dem Rohransatz kann ein Sensoraufnehmer platziert werden, der mit dem Riesenmagnetowiderstand (GMR) arbeitet. Der Sensor tastet die Schaufeln radial von außen ab.

Bei einem Drehwinkelmesser gemäß der DE 100 02 331 A1 wird vorgeschlagen, mittels eines GMR-Sensors und eines mehrstufigen Getriebes eine möglichst präzise Winkelmessung eines drehenden Teiles vorzunehmen. Bereits die Getriebeanordnung verhindert einen Einsatz dieser Gedanken bei Durchflussmengenfühlern und Volumensensoren.

Alle Vorschläge zum Einbau von GMR-Sensoren betreffen übliche Umgebungsbedingungen, also im Wesentlichen Zimmertemperatur und normale Druckverhältnisse. Umfangreiche Anwendungsbeispiele in "GMR-Sensors Data Book", herausgegeben von der NVE Corporation, Eden Prairie, Minnesota, USA im April 2003, beziehen sich ebenfalls auf normale Umgebungsverhältnisse, allenfalls mit erhöhten Temperaturen.

Ein Einsatz von GMR-Sensoren bei Volumensensoren ist daher bisher noch nicht in Betracht gezogen worden, wenn hier Drücke und Druckspitzen von 60 MPa bis 80 MPa (600 bis 800 Bar) auftreten können und bei diesen extremen Belastungen auch noch eine hochpräzise Arbeitsweise sichergestellt sein muss. Außerdem können die zu messenden Fluide elektrisch leitfähige und aggressive Flüssigkeiten sein, was die Funktionstüchtigkeit des gesamten Durchflussmengenfühlers nicht beeinträchtigen darf.

Überraschend wird durch die Konzeption nach der Erfindung es möglich, herkömmliche Durchflussmengensensoren wesentlich zu verbessern, in dem GMR-Sensoren in geeigneter Form eingesetzt werden. Die GMR-Sensoren werden jetzt nicht radial außerhalb der Zahnräder, wie etwa bei der DE 296 12 946 U1 eingesetzt, sondern axial unmittelbar neben den Zahnrädern beziehungsweise vergleichbaren Elementen. Anders als im Stand der Technik bei Durchflussmengenfühlern können sie jedoch dort wesentlich dichter und näher an dem Inneren der Messkammer benachbart zu den Zähnen angeordnet werden.

Die Signale des Sensors sind deutlich stärker und größer als in herkömmlichen Geräten, sodass sie in nachgeschalteten Einrichtungen, etwa in Vorverstärkern oder Auswerteeinrichtungen, besser und störungsfreier verarbeitet werden können.

Von besonderem Vorteil ist es, dass diese GMR-Sensoren in Form von integrierten Schaltkreisen (IC) aufgebaut werden können. Bevorzugt wird eine auf einer Elektronikplatine aufgelötete integrierte Schaltung eines GMR-Sensors eingesetzt. Die Platine stellt dann einerseits die elektrische Verbindung des Sensors zur Auswerteeinheit her und dichtet zugleich das Gerät beziehungsweise die Messkammer mechanisch gegen die im Inneren befindlichen, unter Druck stehenden Fluide ab, also gegen Flüssigkeiten oder auch gegen Gase.

Da sich auf diese Weise der Sensor praktisch im Inneren der Messkammer beziehungsweise unmittelbar angrenzend dazu anordnen lässt, wird anders als im Stand der Technik keine zusätzliche, den Platzbedarf erhöhende amagnetische Abschirmung mehr benötigt und der Sensor kann auf diese Weise sehr viel dichter in den Bereich der abzutastenden Zahnräder, Messspindeln und dergleichen gebracht werden. Lediglich die Dicke einer Vergussmasse trennt noch den Sensor von den zu messenden Messwerkelementen. Die Dicke dieser Vergussmasse ist zum einen sehr gering und zum anderen abhängig von den äußeren Randbedingungen sehr klein zu halten.

Zugleich kann die Platine zur Fixierung und Positionierung des oder der Magneten dienen. Ein oder mehrere Magneten waren auch schon im Stand der Technik naturgemäß erforderlich, um ein Magnetfeld aufzubauen. Die Änderungen des jeweiligen Magnetfeldes wurden wie erörtert durch die Bewegungen der Zähne der Zahnräder durch das Magnetfeld hinweg verursacht. Diese Änderungen wurden dann herkömmlich durch den Feldplattendifferenzialfühler gemessen und ausgewertet.

Ein Magnetfeld wird auch erfindungsgemäß benötigt. Es wird auch im vorliegenden Falle durch einen oder mehrere Magneten aufgebaut. Während aber bisher dieser Magnet separat ebenfalls geschützt mit im Gehäuse angeordnet werden musste, kann erfindungsgemäß die Platine, die auch die integrierten Schaltkreise trägt, ebenfalls den oder die Magneten aufnehmen, fixieren und/oder positionieren. Das von dem oder den Magneten aufgebaute Magnetfeld wird wiederum durch die Zähne der Zahnräder beziehungsweise durch andere Messwerkelemente bei anderen Formen von Durchflussmengenfühlern verändert. Der GMR-Sensor stellt jetzt allerdings einen anderen Effekt fest, nämlich eine Beeinflussung des Riesenmagnetowiderstandes durch das sich ändernde Magnetfeld.

Durch die gleichzeitige Verwendung der Platine zur Fixierung und Positionierung des oder der Magneten können jedoch zusätzliche Bauteile entfallen und es wird möglich, dass Durchflussmengenfühler noch einfacher aufzubauen.

Außen ist die Platine über einen O-Ring abgedichtet.

Die Platine selbst besitzt durchkontaktierte Bohrungen, in die dann etwa benötigte Kabel eingelötet werden können.

Damit entfallen praktisch sämtliche Bauelemente, die im Stand der Technik etwa nach der DE 40 42 397 C2 noch einzusetzen sind, also die Anschlussstifte oder die Halteplatte zur Aufnahme der Stifte ebenso wie der nicht mehr benötigte amagnetische Einsatz. Die Verwendung der integrierten Schaltung (IC) mit der Platine praktisch im Druckraum und die erwähnte Vorgehensweise beim Einbau sind außerordentlich wirtschaftlich. Außer dem integriertem Schaltkreis des Magneten und der Platine werden praktisch keine weiteren Bauteile mehr benötigt.

Ein weiterer Vorteile entsteht dadurch, dass die für die Auswertung zweckmäßigerweise eingesetzte Wheatstonesche Brücke jetzt komplett im Gerät angeordnet werden kann, und zwar einheitlich mit beiden Zweigen der Wheatstoneschen Brücke. Daraus folgt dann, dass die beiden Zweige auf praktisch gleichem Temperaturniveau liegen, sodass es nicht mehr erforderlich ist, für abweichende Temperaturen in den beiden Zweigen Korrekturen an den Messwerten rechnerisch vorzunehmen.

Für den Magneten wird bevorzugt ein Samarium-Kobalt-Magnet eingesetzt, da dieser temperaturunabhängig arbeitet und damit Vorteile gegenüber Magneten besitzt, die auf Noedym-Basis aufgebaut sind.

Die Erfindung kann nicht nur bei Zahnradsensoren, sondern auch bei anderen Durchflussmengenfühlern beziehungsweise Volumensensoren verwendet werden, beispielsweise bei Schraubenspindelzählern, Ovalradzählern, Ringkolbenzählern oder auch bei Messturbinen oder bei Zahnrad-Dosierpumpen. Statt bei Zähnen von Zahnrädern findet dort eine Messung bei anderen Messwerkelementen statt, die sich in äquivalenter Form verhalten, meistens drehend.

Der Riesenmagnetowiderstand ist ein bestimmter Effekt, der sich durch eine Änderung des elektrischen Widerstandes einer Viellagenschicht aus ferromagnetischen und nicht ferromagnetischen Schichten ergibt, die jeweils nur einige Nanometer dick sind. Diese Änderung des elektrischen Widerstandes ergibt sich bei der Annäherung eines Magnetfeldes. Dadurch lässt sich der Riesenmagnetowiderstand im vorliegenden Fall tatsächlich nutzen, indem hier diese Änderung gemessen wird in Abhängigkeit von der Änderung des Magnetfeldes auf Grund der Bewegung der Messwerkelemente, also beispielsweise auf Grund der Bewegung der Zähne eines Zahnrades.

Das erfindungsgemäße Konzept führt zu einer hohen Empfindlichkeit und einem großen Messbereich.

Vom großen Vorteil ist es unter Anderem auch, dass durch die Erfindung sich ein sehr gleichmäßiges Sinussignal als Ausgangssignal erzeugen lässt. Gleichmäßige Sinussignale ermöglichen eine besonders zuverlässige Auswertung und darüber hinaus auch eine detailliertere Untersuchung der einzelnen Teilbereiche des Sinussignals, was weitere Einsatzmöglichkeiten anbietet.

Von Vorteil ist auch, dass sich die entsprechenden Sensoren für die Durchflussmengenfühler gemäß der Erfindung sehr praktikabel und wirtschaftlich herstellen lassen. Die Platinen werden dabei im Nutzen gefertigt und automatisch bestückt.

Die elektrische Verbindung aus dem Bereich der Messkammer, also aus dem Druckraum heraus, kann über Lötungen in den durchkontaktierten Bohrungen der Platine erfolgen. Eine solche Verbindung ist äußerst sicher und widersteht auch den sehr hohen Drücken und Temperaturbelastungen im Bereich der Fluide in der Messkammer.

Es ist dabei bevorzugt, wenn der Sensor mittels eines Flachbandkabels elektrisch mit einer Schaltungseinrichtung verbunden ist und das Flachbandkabel vom Sensor durch eine Lochbohrung in dem Gehäuse des Durchflussmengenfühlers zur Schaltungseinrichtung geführt ist.

Die Schaltungseinrichtung ist dabei bevorzugt ein Vorverstärker. Das Flachbandkabel bildet dann die Verbindung vom Sensor zum Vorverstärker. Der Vorverstärker seinerseits ist Bestandteil des erfindungsgemäßen Gerätes und gibt die von ihm verarbeiteten Daten nach außen an eine Auswerteeinheit.

Im Folgenden wird anhand der Zeichnung ein Ausführungsbeispiel der Erfindung näher beschrieben. Es zeigen:
- **Figur 1**: einen senkrechten Schnitt durch ein erfindungsgemäßes Durchflussmengenfühler längs der Linienführung A-A aus Figur 2;
- **Figur 2**: eine Draufsicht, teilweise weggebrochen, auf das Durchflussmengenfühler aus Figur 1;
- **Figur 3**: einen vergrößerten Ausriss der Einzelheit X aus Figur 1;
- **Figur 4**: einen Schnitt durch einen Teilbereich eines Durchflussmengenfühler nach der Erfindung; und
- **Figur 5**: eine Draufsicht auf den Teilbereich aus Figur 1;
- **Figur 6**: eine schematische Darstellung einer erfindungsgemäß eingesetzten Wheatstoneschen Brücke.

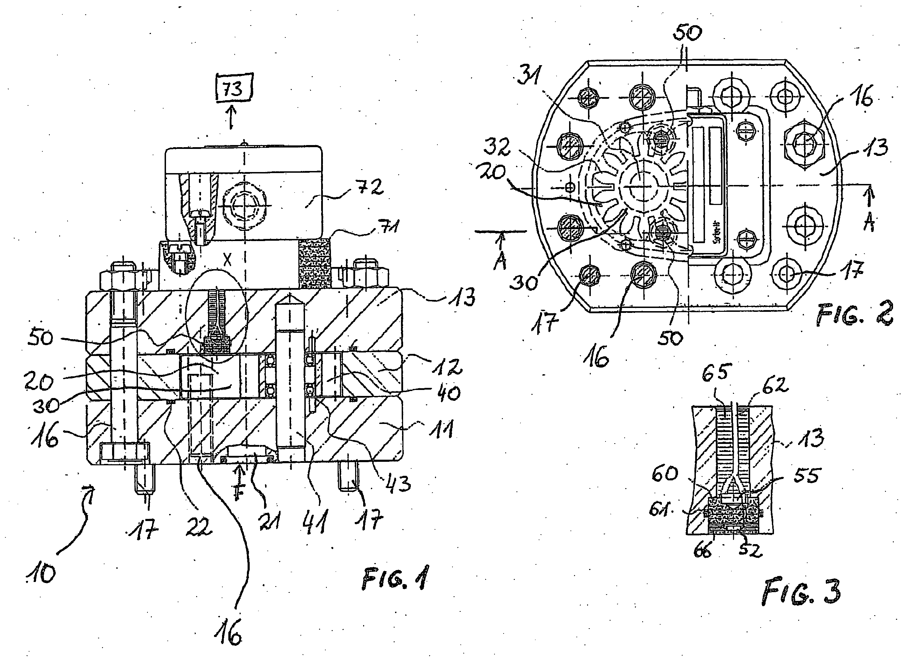

**Figur 1** zeigt als Übersicht einen Schnitt durch ein erfindungsgemäßes Durchflussmengengerät. Der Schnitt ist nicht in einer exakten Ebene geführt, sondern springt mehrfach vor und zurück, um die Einzelheiten des Durchflussmengengerätes besser zu zeigen. Die genauere Linienführung der Vor- und Rücksprünge kann der **Figur 2** entnommen werden.

Zu erkennen ist insbesondere ein Gehäuse 10 des Durchflussmengenfühlers. Das Gehäuse 10 weist insbesondere drei aufeinander gelegte plattenähnliche Elemente auf, nämlich eine Grundplatte 11, ein Mittelstück 12 und einen Deckel 13. Dabei sind die Grundplatte 11 und das Mittelstück 12 zusammengenommen ungefähr zu vergleichen mit der ersten Gehäusehälfte, die im Stand der Technik in der DE 40 42 397 C2 erwähnt wird.

Die Grundplatte 11, das Mittelstück 12 und der Deckel 13 werden durch Passschrauben 16 sowie durch Befestigungsschrauben 17 miteinander verbunden. Diese Verbindung muss sehr exakt einerseits und sehr fest andererseits sein, da sich im inneren Bereich des Mittelstückes 12 eine Messkammer 20 befindet.

Ein kurzer Blick auf die **Figur 2** zeigt die Anordnung gesehen aus der Richtung von oben in Figur 1. Zu erkennen sind auf der rechten Seite die Köpfe der Passschrauben 16 und der Befestigungsschrauben 17. Wie man sieht, sind ringsum auf der Oberseite des Deckels 13 acht Köpfe von Passschrauben und vier Köpfe von Befestigungsschrauben zu sehen, um ein gleichmäßiges, festes und dichtes Anziehen dieser Schrauben zu ermöglichen.

In der Figur 1 wiederum sieht man, dass sowohl die Befestigungsschrauben 17 als auch die Passschrauben 16 ganz durch das Gehäuse 10 mit der Grundplatte 11, dem Mittelstück 12 und dem Deckel 13 hindurchgehen.

Die Messkammer 20 ist nur im Mittelstück 12 ausgebildet, sie wird dementsprechend also unten durch die Grundplatte 11 und oben durch den Deckel 13 abgeschlossen, die dadurch die Stirnwände der Messkammer 20 bilden.

In die Messkammer 20 führt eine Anschlussbohrung 21 in der Grundplatte 11. Durch diese Anschlussbohrung 21 kann ein Fluid F, also das hier interessierende Medium zugeführt werden. Eine zweite Anschlussbohrung in der Grundplatte 11 ist in den Figuren 1 und 2 nicht zu erkennen; durch diese zweite Anschlussbohrung wird das Fluid F dann wieder nach Durchlaufen durch die Messkammer 20 abgeführt.

Die Messkammer 20 ist neben den Stirnwänden, die wie erwähnt von der Grundplatte 11 und dem Deckel 13 gebildet werden, ringsum von den Wandungen des Mittelstückes 12 umschlossen, wie sich auch in der gestrichelten Darstellung auf der linken Hälfte der Figur 2 zeigt. Darüber hinaus sind (vergleiche wiederum Figur 1) O-Ringe 22 vorgesehen, um die Spalte zwischen den Unterund Oberseiten des Mittelstückes 12 einerseits und der Unterseite des Deckels 13 sowie der Oberseite der Grundplatte 11 abzudichten.

In der Messkammer 20 befinden sich zwei Messwerkelemente 30 und 40. In der dargestellten Ausführungsform handelt es sich jeweils um Zahnräder.

Dabei ist in der Figur 2 von oben gut auf der linken Seite das erste Zahnrad beziehungsweise das erste Messwerkelement 30 zu erkennen. In seiner Mitte befindet sich die Achse 31, um die sich das Zahnrad beziehungsweise erste Messwerkelement 30 frei drehen kann, nach außen ragen von der Achse 31 des Messwerkelementes 30 eine Reihe von Zähnen 32 nach außen.

In der Figur 1 ist das erste Messwerkelement 30 nur schematisch auf der linken Seite zu erkennen, da die Linienführung A des Schnittes die Messkammer 20 nur im Randbereich des ersten Messwerkelementes 30 streift.

Dafür ist das zweite Messwerkelement 40, hier also das zweite Zahnrad, in der Figur 1 vollgeschnitten dargestellt. Man erkennt im Schnitt die Achse 41 und blickt noch auf zwei Flanken von Zähnen 42. Zu erkennen sind ferner verschiedene Elemente eines Lagers 43, das die freie Drehbarkeit auch des zweiten Messwerkelementes 40 sicherstellt.

Beide Messwerkelemente 30, 40 bestehen aus einem ferromagnetischen Material, mit dem sich Magnetfelder deutlich beeinflussen lassen, wenn die Messwerkelemente 30, 40 um die Achsen 31,41 drehen.

Wie man erkennt, kämmen die beiden Messwerkelemente 30, 40 miteinander und das durch die Anschlussbohrung 21 zugeführte Fiuid F sorgt für eine gegensinnige Drehung der beiden Messwerkelemente 30, 40.

In der Figur 1 relativ klein dargestellt ist eine Sensoreinrichtung 50. In der Figur 2 sieht man, dass im konkreten Ausführungsbeispiel zwei Sensoreinrichtungen 50 in ähnlicher Ausgestaltung vorgesehen sind. Beide befinden sich oberhalb der Messkammer 20 in einem Bereich, unter dem sich die Zähne 32 des ersten Messwerkwerkelementes 30 hinwegdrehen. Die ferromagnetischen Eigenschaften des ersten Messwerkelementes 30 führen dazu, dass ein unterhalb der Sensoreinrichtung 50 befindliches Magnetfeld 56 beeinflusst wird und sich ändert. Einzelheiten hier werden noch im folgenden angegeben.

Eine der beiden Sensoreinrichtungen 50 ist in der **Figur 3** etwas vergrößert dargestellt. Die Figur 3 zeigt also einen Teilbereich aus dem Deckel 13 oberhalb der Messkammer 20. In dem Deckel 13 ist ein Kanal aufgeschnitten, in dem die Sensoreinrichtung 50 eingepasst ist.

Zentrales Element der Sensoreinrichtung 50 ist ein Magnet 55, hier ein Rundmagnet. Er baut das Magnetfeld 56 auf, das durch die ferromagnetischen Eigenschaften des Messwerkelementes 30 verändert wird.

Die Änderungen des Magnetfeldes werden durch einen Sensor 52 aufgenommen und erfasst, der auf der Grundlage des physikalischen Effektes des Riesenmagnetowiderstandes arbeitet. Dieser Sensor 52 ist fast unmittelbar oberhalb der Unterkante des Deckels 13 angeordnet und liegt damit fast ohne Abstand oberhalb der Messkammer 20 mit dem sich darin drehenden ersten Messwerkelement 30. Die Änderungen des Magnetfeldes 56 geschehen damit praktisch unmittelbar neben dem Sensor 52 und können höchstpräzise und exakt aufgenommen werden.

Der Sensor 52 und der Magnet 55 sind beide an einer Platine 60 angeordnet und mit dieser verbunden. Auf dieser Platine 60 befindet sich auch eine integrierte Schaltung (nicht dargestellt). Die Platine 60 ist zugleich eine Druckplatte. Sie wird durch einen O-ring 61 allseits innerhalb des Deckels 13, abgedichtet denn in der unmittelbar unterhalb des Sensors 52 befindlichen Messkammer 20 sind wie erwähnt Fluide, die sehr hohe Temperaturen aufweisen können. Dort kann auch ein hoher Druck herrschen, die Fluide F können auch chemisch oder physikalisch aggressiv sein. Die Druckplatteneigenschaft der Platine 60 zusammen mit der Abdichtung durch den O-Ring 61 verhindert ein Hindurchtreten des Fluides F in den Deckel 13 hinter die Platine 60, gesehen in der Figur 3 oder in der Figur 1 nach oben.

Eine elektrische Verbindung von der Platine 60, dem Magneten 55 und dem Sensor 52 mit den riesenmagnetowiderstandsmessenden Eigenschaften erfolgt durch ein Flachbandkabel 62, das hier schematisch dargestellt ist.

Der Bereich um das Flachbandkabel 62 wird durch eine Vergussmasse 65 ausgefüllt, um das Kabel völlig stabil zu halten und das Eindringen von Fremdkörpern von außen außerhalb des Gehäuses in diesen Bereich zu verhindern.

Eine zweite Vergussmasse 66 füllt den Bereich zwischen der Platine 60 mit den Druckplatteneigenschaften und der Messkammer 20 vollkommen aus und bettet dadurch den Sensor 52 vollständig ein. Hier ist eine glatte Oberfläche erwünscht, um kein Strömungsverhalten des Fluids F zu erreichen, das die Messung stören könnte.

In der Figur 1 sieht man, dass die Verbindung über das Flachbandkabel 62 in eine Zwischenplatte 71 führt, durch die eine Verbindung zu einem Vorverstärker 72 und von dort aus dem Durchflussmengenfühler heraus zu einer Auswerteeinheit 73 gegeben ist. Diese sind hier rein schematisch dargestellt. Sie können gegebenenfalls ausgetauscht und den konkreten äußeren Bedingungen des Durchflussmengenfühleres angepasst werden.

Der Magnet 55, in einer bevorzugten Ausführungsform ein Samarium-Kobald-Magnet, erzeugt das magnetische Feld 56. Dieses magnetische Feld 56 erstreckt sich in die Messkammer 20 und die dazu benachbarten umgebenden Bereiche. Das magnetische Feld 56 durchdringt insbesondere den Sensor 52, der hier erfindungsgemäß ein GMR-Sensor ist. Das magnetische Feld 66 wird durch den benachbarten, gerade unter dem Magneten 55 und dem Sensor 52 vorbeilaufenden Zahn 32 und die zugehörige Zahnlücke des Zahnrades 30 durch die Drehung gestört. Dieses wechselnde magnetische Feld 56 erzeugt im GMR-Sensor 52 ein elektrisches Signal, das in der Schalteinrichtung, hier also dem Vorverstärker 72 verstärkt und digitalisiert wird. Das digitale Signal wird dann über ein weiteres, nicht dargestelltes Kabel zur Auswertelektronik außerhalb des Durchflussmengenfühlers geleitet und dort ausgewertet.

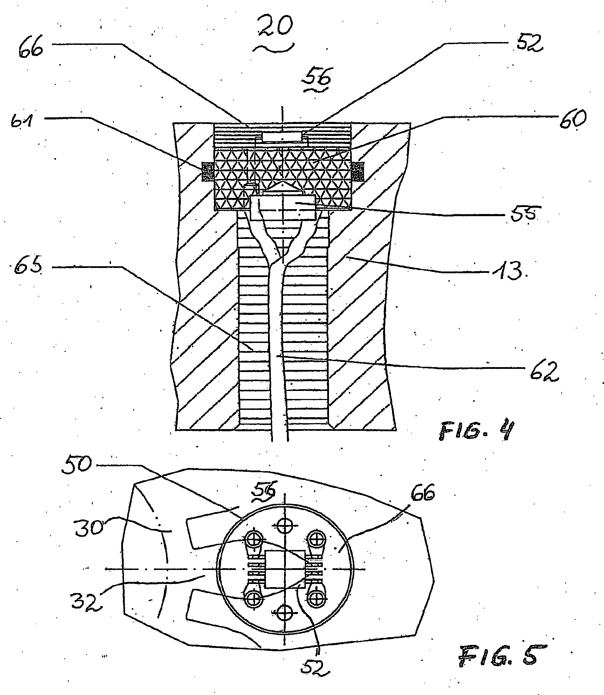

In der **Figur 4** ist die Darstellung aus Figur 3 in ähnlicher Form nochmals wiederholt. Aus darstellerischen Gründen ist hier die Ansicht praktisch auf Kopf gestellt, sodass sich die Messkammer 20 des Durchflussmengenfühlers in dem Gehäuse 10 oben befindet. Angedeutet ist dort auch, dass sich in diesem Bereich das Magnetfeld 56 befindet, das sich durch die Bewegung der (nicht dargestellten) Zähne 32 des ersten Messwerkelementes 30 regelmäßig ändert. Zu bedenken ist hier übrigens, dass in dem Fall, dass das Messwerkelement kein Zahnrad ist, statt Zähnen auch andere Elemente denkbar sind.

In vergrößerter Darstellung sieht man wiederum den Magneten 55 und den Sensor 52, der den Effekt des Riesenmagnetowiderstandes nutzt.

Der Magnet 55 und die weiteren Elemente sind über ein Flachbandkabel 62 in der Darstellung in Figur 4 nach unten führend mit der Zwischenplatte 71 und den in Zusammenhang mit Figur 3 beschriebenen weiteren Elementen elektrisch verbunden.

**Figur 5** stellt die Ansicht aus Figur 4 nochmals dar, und zwar hier gesehen von oben. Man blickt also auf die Vergussmasse 66. Angedeutet ist noch ein Zahn 32 des Messwerkelementes 30, der sich gerade unterhalb der Sensoreinrichtung 50 befindet, sich also beispielsweise in einer Bewegung befindet, in der er diesen Bereich überstreicht.

In der Darstellung gedacht ist die Vergussmasse 66 durchsichtig, was in der Praxis natürlich nicht sein muss. Durch die Vergussmasse 66 kann man daher im vorliegenden Fall den Sensor 52 erkennen, zudem auch Anschlüsse führen, sodass man die Platine 60 teilweise erkennen kann.

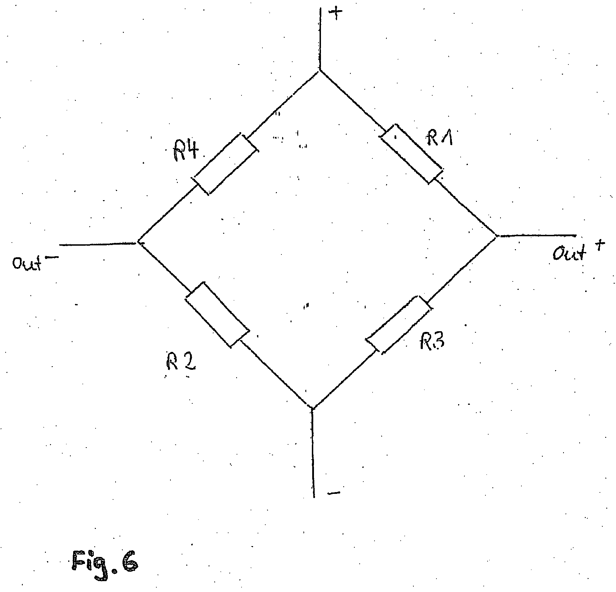

In **Figur 6** ist schematisch der Aufbau einer Wheatstoneschen Brücke wiedergegeben, die als Teil der integrierten Schaltung auf der Platine 60 den GMR-Sensor 52 einschließt.

Zu sehen ist die übliche Schaltung einer Wheatstoneschen Brücke mit vier Widerständen, von denen drei bekannt sind und der vierte durch das Magnetfeld 56 entsprechend beeinflusst wird.

### Bezugszeichen

- 10: Gehäuse
- 11: Grundplatte
- 12: Mittelstück
- 13: Deckel
- 16: Passschrauben
- 17: Befestigungsschrauben

- 20: Messkammer
- 21: Anschlussbohrung
- 22: O-Ringe für die Messkammer

- 30: erstes Messwerkelement, insbesondere erstes Zahnrad
- 31: Achse des ersten Messwerkelements 30
- 32: Zahn des ersten Messwerkelementes 30

- 40: zweites Messwerkelement, insbesondere zweites Zahnrad
- 41: Achse des zweiten Messwerkelementes 40
- 42: Zahn des zweiten Messwerkelementes 40
- 43: Lagerung des zweiten Messwerkelementes 40

- 50: Sensoreinrichtung
- 52: Sensor
- 55: Magnet
- 56: magnetisches Feld

- 60: Platine
- 61: O-Ring
- 62: Flachbandkabel
- 65: erste Vergussmasse
- 66: zweite Vergussmasse

- 71: Zwischenplatte
- 72: Vorverstärker
- 73: Auswerteeinheit

- F: Fluid

## Patentansprüche

1. Durchflussmengenfühler
mit einer Messkammer (20), in die ein Fluid (F) zuführbar und wieder abführbar ist, dessen Volumen und/oder Durchflussgeschwindigkeit gemessen werden soll,
mit zwei in der Messkammer (20) angeordneten, frei um jeweils eine Achse (31, 41) drehbar gelagerten Messwerkelemente (30, 40) mit Zähnen (32, 42), mit mindestens einer Sensoreinrichtung (5) zur Messung eines magnetischen Feldes (56) und/oder von Veränderungen des magnetischen Feldes (56),
wobei die Sensoreinrichtung (50) axial versetzt zu den frei drehbar gelagerten Messwerkelementen (30, 40) oberhalb der Messkammer (20) in einem Bereich angeordnet ist, unter dem sich die Zähne (32) des ersten Messwerkelementes (30) hinwegdrehen,
**wobei** ein Magnet (55) zur Erzeugung des magnetischen Feldes (56) in der Messkammer (20) und ihrer näheren Umgebung vorgesehen ist;
**wobei** die Sensoreinrichtung (50) zur Messung des magnetischen Feldes (56) mindestens einen Sensor (52) aufweist, der den Riesenmagnetowiderstand nutzt;
**wobei** die Sensoreinrichtung (50) eine Platine (60) aufweist, die als Druckplatte ausgebildet ist und den den Riesenmagnetowiderstand nutzenden Sensor (52) trägt;
**wobei** das Fluid (F) chemisch oder physikalisch aggressiv sein kann, eine sehr hohe Temperatur aufweisen kann und wobei ein hoher Druck herrschen kann;
**wobei** die Platine (60) durch einen O-Ring (61) allseits abgedichtet ist; **wobei** die Eigenschaft als Druckplatte der Platine (60) zusammen mit der Abdichtung durch den O-Ring (61) ein Hindurchtreten des Fluides (F) hinter die Platine (60) verhindert;
**wobei** die Platine (60) unmittelbar benachbart zur Messkammer (20) angeordnet und lediglich durch eine Vergussmasse (66) von der Messkammer (20) getrennt ist; und
**wobei** die Platine (60) den Magneten (55) trägt.

2. Durchflussmengenfühler nach einem der vorstehenden Ansprüche,
**dadurch gekennzeichnet,**
**dass** der Sensor (52) mittels eines Flachbandkabels (62) elektrisch mit einer Schaltungseinrichtung (72) verbunden ist, und
**dass** das Flachbandkabel (62) vom Sensor (52) durch eine Lochbohrung in dem Gehäuse (10) des Durchflussmengenfühlers zur Schaltungseinrichtung (72) geführt ist.

3. Durchflussmengenfühler nach einem der vorstehenden Ansprüche,
**dadurch gekennzeichnet,**
**dass** der Magnet (55) ein Samarium-Kobalt-Magnet ist.

4. Durchflussmengenfühler nach einem der vorstehenden Ansprüche,
**dadurch gekennzeichnet,**
**dass** zwei Sensoreinrichtungen (50) vorgesehen sind, und
**dass** beide Sensoreinrichtungen (50) oberhalb der Messkammer (20) in einem Bereich vorgesehen sind, unter dem sich die Zähne (32) des ersten Messwerkelementes (30) hinwegdrehen, wobei die Änderungen des Magnetfeldes aufgenommen und erfasst werden.

## Claims

1. Flow rate sensor
having a measuring chamber (20), into which a fluid (F), the volume and/or flow rate of which is to be measured, can be fed and then discharged,
having two measuring mechanism elements (30, 40) disposed in the measuring chamber (20) and mounted in a freely rotatable manner about a respective axis (31, 41), and having teeth (32, 42),
having at least one sensor device (5) for measuring a magnetic field (56) and/or variations of the magnetic field (56),
**wherein** the sensor device (50) is disposed axially offset relative to the freely rotatably mounted measuring mechanism elements (30, 40) and above the measuring chamber (22) in a region below which the teeth (32) of the first measuring mechanism element (30) rotate,
**wherein** there is provided a magnet (55) for generating the magnetic field (56) in the measuring chamber (20) and in the immediate vicinity thereof,
**wherein** the sensor device (50) for measuring the magnetic field (56) comprises at least one giant magnetoresistance sensor (52),
**wherein** the sensor device (50) comprises a printed circuit board (60), which is configured as a pressure plate and carries the giant magnetoresistance sensor (52); **wherein** the fluid (F) can be chemically or physically aggressive, can have a very high temperature and wherein a high pressure can prevail;
**wherein** the printed circuit board (60) is sealed at all sides by an O-ring (61);
**wherein** the property of the printed circuit board (60) as a pressure plate together with the sealing effect of the O-ring (61) prevents passage of the fluid (F) through to behind the printed circuit board (60);
**wherein** the printed circuit board (60) is disposed immediately adjacent to the measuring chamber (20) and is separated from the measuring chamber (20) only by a casting compound (66); and
**wherein** the printed circuit board (60) carries the magnet (55).

2. Flow rate sensor according to one of the preceding claims,
**characterised in**
**that** the sensor (52) is connected by means of a flat ribbon cable (62) electrically to a circuit device (72),
and
**that** the flat ribbon cable (62) is run from the sensor (52) through a drill hole in the housing (10) of the flow rate sensor to the circuit device (72).

3. Flow rate sensor according to one of the preceding claims,
**characterised in**
**that** the magnet (55) is a samarium-cobalt magnet.

4. Flow rate sensor according to one of the preceding claims,
**characterised in**
**that** two sensor devices (50) are provided, and
**that** both sensor devices (50) are provided above the measuring chamber (20) in a region below which the teeth (32) of the first measuring mechanism element (30) rotate, wherein the variations of the magnetic field are picked up and acquired.

## Revendications

1. Sonde de débit
avec une chambre de mesure (20), dans laquelle un fluide (F) peut être amené et évacué à nouveau, dont le volume et/ou la vitesse d'écoulement doivent être mesurés,
avec deux éléments de système de mesure (30, 40) disposés dans la chambre de mesure (20), montés de manière à pouvoir tourner librement autour de respectivement un axe (31, 41), avec des dents (32, 42) avec au moins un dispositif de capteur (5) servant à mesurer un champ magnétique (56) et/ou des modifications du champ (56) magnétique,
dans laquelle le dispositif de capteur (50) est disposé de manière axialement décalée par rapport aux éléments de système de mesure (30, 40) montés de manière à pouvoir tourner librement au-dessus de la chambre de mesure (20) dans une zone, sous laquelle les dents (32) du premier élément de système de mesure (30) s'éloignent en tournant,
dans laquelle un aimant (55) est prévu pour générer le champ (56) magnétique dans la chambre de mesure (20) et dans son environnement plus proche ;
dans laquelle le dispositif de capteur (50) servant à mesurer le champ (56) magnétique présente au moins un capteur (52), qui utilise la magnétorésistance géante,
dans laquelle le dispositif de capteur (50) présente une platine (60), qui est réalisée sous la forme d'une plaque de pression et supporte le capteur (52) utilisant la magnétorésistance géante ;
dans laquelle le fluide (F) peut être agressif chimiquement ou physiquement, peut présenter une température très élevée et dans laquelle une pression élevée peut régner ;
dans laquelle la platine (60) est étanchéifiée de toutes parts par un joint torique (61) ;
dans laquelle la propriété en tant que plaque de pression de la platine (60) combinée à l'étanchéification par le joint torique (61) empêche un passage du fluide (F) derrière la platine (60) ;
dans laquelle la platine (60) est disposée directement de manière adjacente par rapport à la chambre de mesure (20) et est séparée de la chambre de mesure (20) seulement par une masse de scellement (66) ; et
dans laquelle la platine (60) supporte l'aimant (55).

2. Sonde de débit selon la revendication précédente,
**caractérisée en ce**
**que** le capteur (52) est relié de manière électrique à un dispositif de commutation (72) au moyen d'un câble plat (62), et
**que** le câble plat (62) est guidé depuis le capteur (52) vers le dispositif de commutation (72) à travers un perçage dans le boîtier (10) de la sonde de débit.

3. Sonde de débit selon l'une quelconque des revendications précédentes,
**caractérisée en ce**
**que** l'aimant (55) est un aimant de samarium-cobalt.

4. Sonde de débit selon l'une quelconque des revendications précédentes,
**caractérisée en ce**
**que** deux dispositifs de capteur (50) sont prévus, et
**que** les deux dispositifs de capteur (50) sont prévus au-dessus de la chambre de mesure (20) dans une zone, sous laquelle les dents (32) du premier élément de système de mesure (30) s'éloignent en tournant, dans laquelle les changements du champ magnétique sont relevés et détectés.
